# EUROPEAN PATENT SPECIFICATION

(11) **EP 3 885 632 B1**
(45) Date of publication and mention of the grant of the patent: **05.10.2022**
(21) Application number: 21382244.8
(22) Date of filing: 25.03.2021
(51) Int. Cl.: F16M 13/02

(54) **DEVICE FOR CLAMPING ELECTRONIC ELEMENTS ON INSTALLATION MASTS**
VORRICHTUNG ZUM SPANNEN VON ELEKTRONISCHEN ELEMENTEN AN EINBAUMASTEN
DISPOSITIF DE FIXATION D'ÉLÉMENTS ÉLECTRONIQUES SUR DES MÂTS D'INSTALLATION

(30) Priority: 27.03.2020 ES 202030553
(43) Date of publication of application: 29.09.2021
(73) Proprietor: ITS Partner Outsourcing Business Solutions, S.L, 08173 Sant Cugat del Vallés Barcelona (ES)
(72) Inventor: LAVADO GARCIA, Luciano, 20014 SAN SEBASTIAN (GIPUZKOA) (ES)
(74) Representative: Plasseraud IP

(56) References cited:
- WO-A1-2014/081612
- DE-U1-202016 005 415
- US-A1- 2012 074 284
- US-A1- 2016 209 733

## Description

### Technical field

The present invention is related to the clamping of electronic devices on installation masts for such electronic devices, particularly on masts made of ferromagnetic material of a cylindrical configuration, such as, for example, the clamping of a TV signal amplifier on the mast of the corresponding antenna, proposing a device that enables the assembly and disassembly of said clampings to be carried out with ease and reducing the risk of accidents for the operators who perform the work.

### State of the art

In order to achieve optimal operation, the installation of TV signal amplifiers must be made as close as possible to the corresponding antenna, so said amplifiers are conventionally installed on the antenna supporting mast, which implies carrying out works at great heights, with risks that affect the safety of the operators despite the safety measures that may be taken.

The conventional ways of establishing the aforementioned clampings are usually with plastic flanges or brackets that are closed with nuts and bolts, solutions that have a complicated and dangerous assembly, since the operators who carry them out have to use both hands for the installation manipulations while holding on at the same time, which, at a great height level and only with support on the mast on which the work is carried out, is difficult and entails a great safety risk for the operators.

Given the aforementioned drawbacks, the need to develop a clamping device that enables securely clamping electronic devices that are installed on cylindrical masts made of ferromagnetic material at heights or other dangerous locations is evident, in order to facilitate the installation manipulations of such devices and reduce the risks of accidents of the operators.

Other examples of prior art can be found in US 2016/209733 A1 (holder for mobile devices to take self-portraits or selfies remotely), US 2012/074284 A1 (flexible support structure), or in DE 20-2016/005415 U1 (camera mounting system for sports field floodlight poles for mobile video recording).

### Object of the invention

According to the present invention, a magnetic clamping device is proposed to keep electronic devices installed on masts made of ferromagnetic material of a cylindrical configuration in a clamping position, with an embodiment that enables safety to be improved and the installation process to be facilitated.

The device object of the invention comprises a magnet able to be fixed to a rear portion of an electronic device to be clamped on an installation mast made of ferromagnetic material of a cylindrical configuration by means of the magnet. In this way, it is possible to temporarily clamp the devices to be clamped on the mounting masts, by means of a simple support, taking advantage of the magnetic attraction, which can be easily done with one hand without complicated manipulations, to then carry out, in the mounting place and position, the definitive clamping, which is also easier, since the device to be installed does not have to be held with the hands.

According to the invention, the magnet is configured forming a concave channel with respect to the mast in the clamping position of the electronic device on the installation mast, in which the magnet is fixed to the rear portion of the electronic device.

In this way, a clamping device on masts is obtained, which can be used effectively in relation to masts with a diameter greater than the diameter of the curvature of the magnet of the device and in relation to masts with a diameter smaller than the diameter of the curvature of the magnet, that is to say, of the curvature of the concave channel of the magnet, since in relation to masts with a diameter greater than the diameter of the curvature of the magnet, two vertical lines of contact are established between the magnetic clamping magnet and the mast on which clamping has to be established, which determines a greater clamping force than with a single line of contact between the magnet channel and the mast.

In addition, the two vertical lines of contact between the magnet and the mast are established on the sides of the magnet, which determines a greater stability of the clamping, since the tendency to rotate to the sides is prevented.

Furthermore, with the curved magnet, the curvature of the mast on which clamping is established enters the curvature of the magnet between the two vertical lines of contact, approaching the surface of the magnet, so that the magnetic force of attraction is stronger, better securing the clamping.

The greater force of magnetic attraction and security of the clamping does not, however, hinder the separation disassembly with respect to the mast on which a device with this curved magnet solution is clamped, since by performing a side rotation of the device with the magnet incorporated, sliding over the lines of contact between the magnet and the mast, the contact of the clamping comes to two points that make the magnetic attraction very low, the separation being easily carried out. In addition, with the simple rotation, thanks to the curvature of the curved magnet, the surface of the mast that is between the two lines of contact, the mast moves away from the magnet, reducing the magnetic force of attraction and facilitating the separation.

Moreover, in relation to masts with a diameter smaller than the diameter of the curvature of the curved magnet of the clamping device, between the curved magnet of the device and the mast on which clamping is established, only one vertical line of contact is determined, but in this case the side portions of the magnet approach the mast from the vertical line of contact, the magnetic attraction being greater as the magnetic field is in the radial direction, unlike in the event that the magnets were arranged flat, in which the magnetic field is transverse and therefore the clamping is thus stronger than with a flat magnet.

In this case, the curved magnet embraces the side portions of the clamping towards the mast, which prevents the assembly made up of the device being clamped and the magnet from accidentally rotating to the sides with the danger of detachment of the clamping, since the sides of the magnet act as stops preventing said circumstance. This advantage would not ensue if the magnet were flat since it could easily rotate both sideways and around the clamping mast, which would imply an instability of the clamping that would not ensue with the concave magnet object of the invention.

The most favourable case will be when the curvature of the magnet channel coincides with the curvature of the mast, in this way the clamping will be the most effective possible, further enabling the electronic elements to be released with the rotation.

Therefore, a versatile device is obtained which is valid for masts of any curvature.

In the mounting arrangement on the application device to be clamped, the curved magnet is incorporated in a socket in the form of a guide, wherein the magnet is introduced by means of a simple insertion by sliding, being retained in the frontal direction (direction of action of the magnetic field) due to the correspondence between the shape of the sides of the magnet and the shape of the socket, without the need for accessory retention elements, thus being very easy to safely incorporate the magnet in the application device to be clamped. In addition, this configuration enables the magnet to be changed to easily install another magnet with the curved surface of the channel in correspondence with the curvature of the mast, if necessary.

Therefore, the clamping device object of the invention has very advantageous features for the application function for which it is intended, acquiring a life of its own and a preferential character with respect to the conventional solutions used for the same function.

### Description of the figures

Figure 1 shows a perspective view of a device that is intended to be clamped on a mast, incorporating a magnetic clamping device on the rear portion according to the invention.
Figure 2 is a perspective view of the device of the preceding figure arranged in the clamping position on a mounting mast.
Figure 3 is a detailed profile view of a clamping established with the device of the invention on a mast with a diameter greater than the diameter of the curvature of the curved magnet of the clamping device.
Figure 4 is a perspective detailed view of the mounting of the curved magnet in a clamping device according to the invention.
Figure 5 is a detailed profile view of a clamping established with the device of the invention on a mast with a diameter smaller than the diameter of the curvature of the curved magnet of the clamping device.
Figure 6 is a perspective view of the device in a rotated position with respect to the mast for separation thereof, wherein the arrows indicate the rotation movement of the device and the points of contact between the mast and the device are indicated in bold for a better understanding.

### Detailed description of the invention

The object of the invention relates to a device for clamping electronic devices, such as a TV signal amplifier, on mounting masts (2), such as a mast (2) supporting an antenna, particularly in the event of masts (2) made of ferromagnetic material of a cylindrical configuration.

The clamping device comprises a magnet (3) curved in a transverse direction, which is arranged at the rear portion of the electronic device (1) to be clamped, with the channel (4) of the curvature in the longitudinal direction according to the clamping position of the electronic device (1) on the mounting mast (2); the magnet (3) being provided in particular formed by a part configured according to a cross-sectional profile in the shape of a circular trapezoid, as a side part of a hollow cylinder.

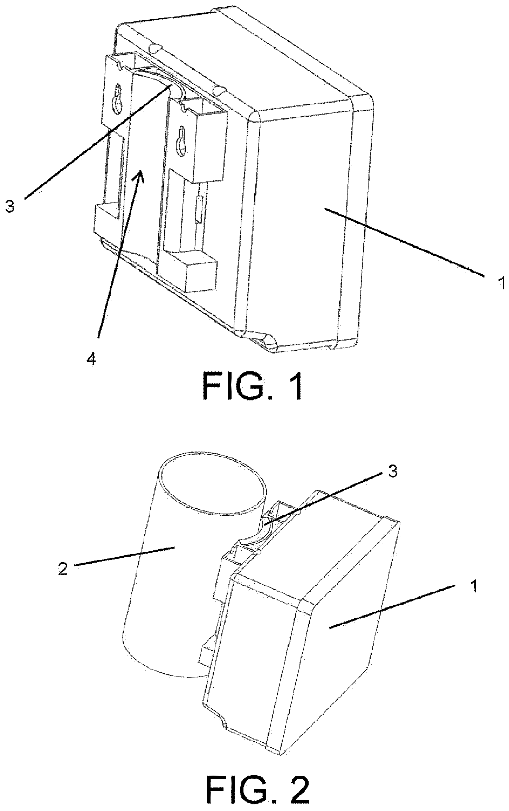

According to an envisaged mounting embodiment, the curved magnet (3) is incorporated in the electronic device (1) being housed in a socket (5) in the form of a guide that reciprocally corresponds to the configuration of the magnet (3), as can be seen in Figure 1, so that the magnet (3) is introduced in said socket (5) by means of longitudinal insertion by sliding, being retained in the frontal direction by the correspondence between the inclined side shape presented by the side edges of the magnet (3) and the reciprocal inclined shape of the sides of the socket (5), without the need for additional means, such as screws or the like, to secure retention.

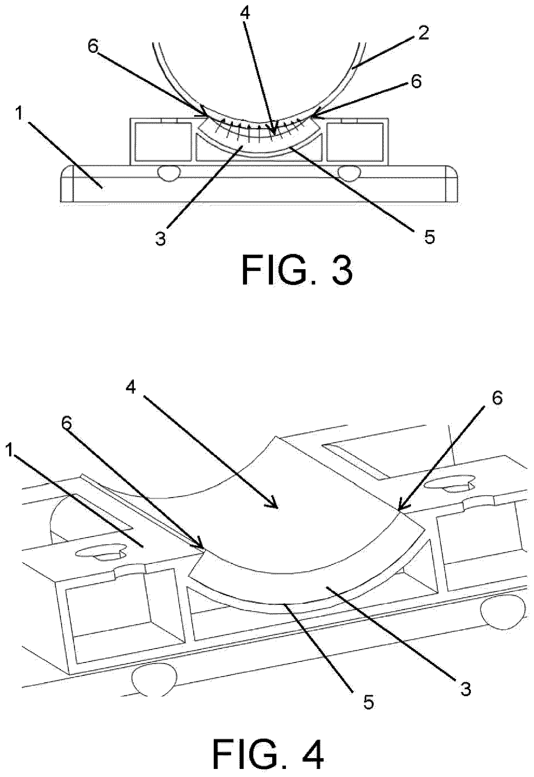

In the mounting housing in the socket (5), it is further envisaged that the magnet (3) is left with the edges (6) that correspond to the concave portion on the sides thereof protruding frontally from the socket (5), as seen in Figure 4.

Thus, the clamping device can be used to clamp an electronic device (1) on a mast (2) made of ferromagnetic material with a diameter greater than the diameter of the transverse curvature of the curved magnet (3), as can be seen in Figure 3, in the arrangement of which the magnet (3) rests on the mast (2) with the edges (6) of the concave portion of the sides establishing two longitudinal lines of contact, between which the curvature of the mast (2) is introduced in the curvature of the magnet (3), reducing the distance between both of them, which improves the magnetic attraction and, therefore, the clamping force.

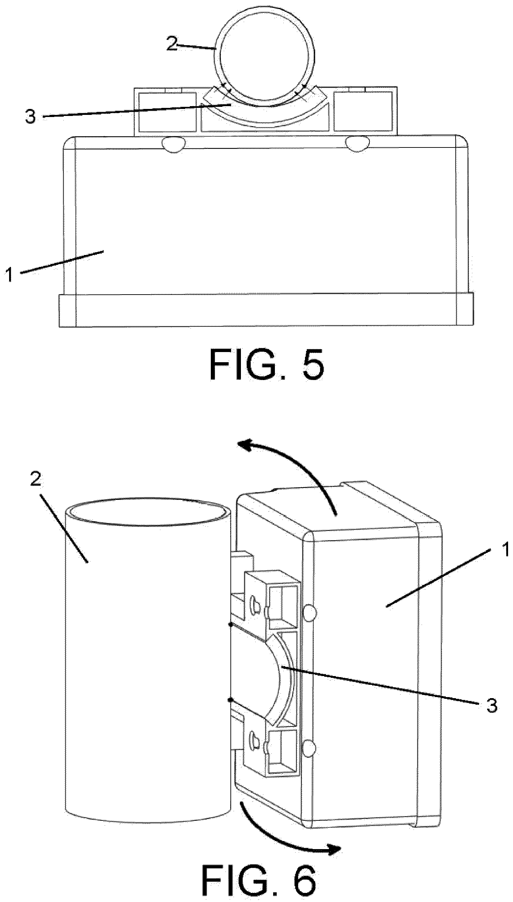

However, the clamping device can further be used to clamp an electronic device (1) on masts (2) made of ferromagnetic material with a diameter smaller than the diameter of the transverse curvature of the curved magnet (3) incorporated in said application devices (1), as seen in Figure 5, in the arrangement of which the magnet (3) rests on the mast (2) in a single longitudinal line of contact, but in this case the side portions of the magnet (3) approach the mast (2) reducing the separation between both of them. This increases the intensity of the magnetic attraction, in this case radial, as can be seen in Figure 5, by means of the arrows representing the magnetic field and, therefore, the clamping force is increased.

In addition, the approaching of the side portions of the magnet (3) towards the mast (2) causes the very side edges of the magnet (3) to become stops on the sides of the clamping, to prevent the unforeseen rotation on its axis of the assembly formed by the electronic device (1) and the magnet (3) to the sides and with it the danger that the electronic device (1) may accidentally detach from the clamping.

When it is necessary to remove the electronic device (1) from the mast (2) for maintenance or replacement work, the device object of the invention advantageously enables the rotation of the electronic device (1) so that, as can be seen in Figure 6, performing a side rotation of the device (1) as indicated by the arrows, the clamping contact comes to be in two points (indicated in bold in Figure 6) instead of one line as in Figure 3 or 2 lines as in Figure 5 of contact of the magnet (3) with the mast (2). In this way, the magnetic attraction is reduced in such a way that the device (1) is easy to separate from the mast (2), being able to be carried out by the operator with only one hand.

## Claims

1. A device for clamping electronic devices on installation masts for such electronic devices (1), such as TV signal amplifiers, comprising:
at least one magnet (3) able to be fixed to a rear portion of an electronic device (1) to be clamped on an installation mast (2) made of ferromagnetic material of a cylindrical configuration by means of the magnet (3),
the at least one magnet (3) is configured to form a concave channel (4) with respect to the mast (2) in the clamping position of the electronic device (1) on the installation mast (2),
wherein the at least one magnet (3) is able to be fixed to the electronic device (1) by being housed in a socket (5) in the form of a guide,
**characterized in that** in the clamping position, the at least one magnet (3) is left with edges (6) that correspond to the concave portion on the sides thereof protruding from the socket (5).

2. The device for clamping electronic devices on installation masts, according to claim 1, wherein the at least one magnet (3) is configured to contact the mast (2) in the clamping position according to at least one line of contact of the channel (4).

3. The device for clamping electronic devices on installation masts, according to claim 1 or 2, wherein the at least one magnet (3) is a part configured according to a cross-sectional profile in the shape of a circular trapezoid.

## Patentansprüche

1. Vorrichtung zum Klemmen elektronischer Bauelemente an Installationsmasten für solche elektronischen Bauelemente (1), z. B. TV-Signalverstärker, die aufweist:
mindestens einen Magneten (3), der an einem hinteren Abschnitt eines elektronischen Bauelements (1) fixierbar ist, das an einem aus ferromagnetischem Material in Zylinderkonfiguration hergestellten Installationsmast mit Hilfe des Magneten (3) zu klemmen ist,
wobei der mindestens eine Magnet (3) so konfiguriert ist, dass er einen konkaven Kanal (4) im Hinblick auf den Mast (2) in der Klemmposition des elektronischen Bauelements (1) am Installationsmast (2) bildet,
wobei der mindestens eine Magnet (3) am elektronischen Bauelement (1) fixierbar ist, indem er in einer Buchse (5) in Form einer Führung aufgenommen ist,
**dadurch gekennzeichnet, dass** in der Klemmposition der mindestens eine Magnet (3) mit Kanten (6) verbleibt, die dem konkaven Abschnitt auf den Seiten davon entsprechen, die von der Buchse (5) vorstehen.

2. Vorrichtung zum Klemmen elektronischer Bauelemente an Installationsmasten nach Anspruch 1, wobei der mindestens eine Magnet (3) so konfiguriert ist, dass er den Mast (2) in der Klemmposition gemäß mindestens einer Kontaktlinie des Kanals (4) kontaktiert.

3. Vorrichtung zum Klemmen elektronischer Bauelemente an Installationsmasten nach Anspruch 1 oder 2, wobei der mindestens eine Magnet (3) ein Teil ist, das gemäß einem Querschnittprofil in Form eines Kreistrapezes konfiguriert ist.

## Revendications

1. Dispositif de fixation de dispositifs électroniques sur des poteaux de montage de tels dispositifs électroniques (1), tels que des amplificateurs de signal TV, comprenant :
au moins un aimant (3) apte à être attaché sur une partie arrière d'un dispositif électronique (1) pour être fixé sur un poteau de montage (2) réalisé en matériau ferromagnétique de configuration cylindrique au moyen de l'aimant (3),
l'au moins un aimant (3) est configuré pour former un canal concave (4) par rapport au poteau (2) dans la position de fixation du dispositif électronique (1) sur le poteau de montage (2),
dans lequel l'au moins un aimant (3) est apte à être attaché au dispositif électronique (1) en étant logé dans une douille (5) sous la forme d'un guide,
**caractérisé en ce que** dans la position de fixation, l'au moins un aimant (3) se retrouve avec des bords (6) qui correspondent à la partie concave sur les côtés de celle-ci faisant saillie de la douille (5).

2. Dispositif de fixation de dispositifs électroniques sur des poteaux de montage, selon la revendication 1, dans lequel l'au moins un aimant (3) est configuré pour entrer en contact avec le poteau (2) dans la position de fixation selon au moins une ligne de contact du canal (4).

3. Dispositif de fixation de dispositifs électroniques sur des poteaux de montage, selon la revendication 1 ou 2, dans lequel l'au moins un aimant (3) est une pièce configurée selon un profil en coupe sous la forme d'un trapèze circulaire.
